# EUROPEAN PATENT APPLICATION

(11) **EP 1 178 385 A2**
(43) Date of publication of application: **06.02.2002**
(21) Application number: 01117779.7
(22) Date of filing: 01.08.2001
(51) Int. Cl.: G06F 1/00

(54) **License management method and apparatus**

(30) Priority: 03.08.2000 JP 2000235829
(71) Applicant: Knowledge Modeling Institute Inc., Nakano-ku, Tokyo (JP)
(72) Inventor: Matsuzuki, Tadao, Suginami-ku, Tokyo (JP)
(74) Representative: Reinhard - Skuhra - Weise & Partner

(57) **Abstract**

In a management apparatus on the customer side, which makes a license agreement of software and/or a use apparatus that installs the software, a report information storage means (11) stores report information that pertains to the license agreement. An elapsed time measurement means (12) detects an elapse of a predetermined term, and outputs detection information. A report information output means (13) automatically sends the report information as use information to a predetermined destination in response to the detection information input from the elapsed time measurement means.

## Description

The present invention relates to a license management apparatus which allows a provider to easily manage the license providing state, charging state, and the like of a large user base, when the provider makes use contracts for microcomputers, software, vehicles such as automobiles and the like, and home electric appliances.

Conventionally, when a software vendor sells software, it makes a license agreement with a customer and sells the software. The contents of the license agreement include clauses prohibiting a user from copying or using the copied software without permission, a clauses prohibiting a user from reselling software to a third party without permission, and the like.

As described above, when the software vendor sells software, it makes a license agreement with a customer. However, the software vendor does not normally manage the license after it sells the software. Hence, some users may illicitly copy and use software in violation of the license agreement. On the other hand, some other users may use the software without noticing the presence of the license agreement.

It is, therefore, an object of the present invention to provide a license management apparatus and method which allow easy management after software that requires a license agreement and an apparatus, device, and the like that require license agreements are rented out to customers.

It is another object of the present invention to provide a license management apparatus and method which can easily set and update a license agreement term.

It is still another object of the present invention to provide a license management apparatus and method which can minimize license fees of software, devices, and the like which require licenses.

In order to achieve the above object, according to the present invention, a license management apparatus on a customer side, which makes a license agreement of software and/or a use apparatus that installs the software, comprises report information storage means for storing report information that pertains to the license agreement, elapsed time measurement means for detecting an elapse of a predetermined term, and outputting detection information, and report information output means for automatically sending the report information as use information to a predetermined destination in response to the detection information input from the elapsed time measurement means.

The report information that pertains to the license agreement may be apparatus use information indicating that the use apparatus is in use. The report information that pertains to the license agreement may be software use information indicating that the use apparatus has installed the software. The software use information may contain version information of the software.

The use apparatus may be a personal computer, or a vehicle such as a passenger vehicle, motorbike, auto truck, and the like, and the report information output means may include a radio device. The use apparatus may be a home electric appliance such as a television receiver, refrigerator, or the like.

The report information output means includes transmission/reception means connected to one of a radio line, telephone line, Internet, and intranet.

The apparatus may incorporate license revocation alert processing means connected to the transmission/ reception means. The license revocation alert processing means may generate use inhibition alert display information upon receiving a license revocation alert command via the transmission/reception means.

According to the present invention, a license management apparatus comprises report information storage means for storing report information that pertains to a license agreement from a plurality of use apparatuses under management, elapsed time measurement means for detecting an elapse of a predetermined term, and outputting detection information, and report information output means for automatically sending the report information as use information to a predetermined destination in response to the detection information input from the elapsed time measurement means.

In the present invention, the report information storage means is connected to the plurality of use apparatuses under the management via communication means, and stores report information that pertains to the license agreement of each use apparatus.

The report information output means may send the number of the plurality of use apparatuses under the management as the use information when the report information output means outputs the report information as the use information. The report information output means may send the number of copies of software installed in the plurality of use apparatuses under the management as the use information when the report information output means outputs the report information as the use information.

The information storage means, elapsed time measurement means, and report information output means are equipped in a relay server. The report information output means includes transmission/reception means connected to one of a radio line, telephone line, Internet, and intranet.

The apparatus may incorporate license revocation alert processing means connected to the transmission/ reception means. The license revocation alert processing means may generate use inhibition alert display information upon receiving a license revocation alert command via the transmission/ reception means.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a diagram showing an example of the arrangement of a network to which the present invention is applied;
FIG. 2 is a block diagram showing an example of the internal arrangement of a computer shown in FIG. 1;
FIG. 3 is a block diagram showing an example of functional blocks of a license management unit shown in FIG. 2;
FIG. 4 shows an example of the transfer format of report information;
FIG. 5 shows another example of the transfer format of report information;
FIG. 6 is a block diagram showing another example of functional blocks of the license management unit shown in FIG. 2;
FIG. 7 shows still another example of the transfer format of report information;
FIG. 8 shows yet another example of the transfer format of report information;
FIG. 9 shows yet another example of the transfer format of report information;
FIG. 10 is a block diagram showing an example of functional blocks of an alert processor shown in FIG. 2;
FIGS. 11A to 11E show examples of alert contents transferred by the alert processor;
FIG. 12 is a block diagram showing another example of functional blocks of the alert processor shown in FIG. 2;
FIG. 13 is a block diagram showing still another example of functional blocks of the license management unit shown in FIG. 2;
FIG. 14 is a block diagram showing an arrangement of the detailed arrangement of an information check means shown in FIG. 13;
FIG. 15 is a view for explaining the cell structure in a cell file shown in FIG. 2;
FIG. 16 is a view for explaining the data management format in a cell;
FIG. 17 is a view for explaining the types of cells in the cell file shown in FIG. 2 and a method of using them;
FIG. 18 is a view for explaining the operation function of cells;
FIG. 19 is a view for explaining the operation function of cells;
FIG. 20 is an explanatory view showing the flows of information on the user and supervisor sides in a system according to the present invention;
FIG. 21 is a block diagram showing another embodiment of a license management unit on the supervisor side according to the present invention; and
FIG. 22 is a block diagram showing another embodiment of a license management unit on the user side according to the present invention.

A preferred embodiment of the present invention will be described hereinafter with reference to the accompanying drawings.

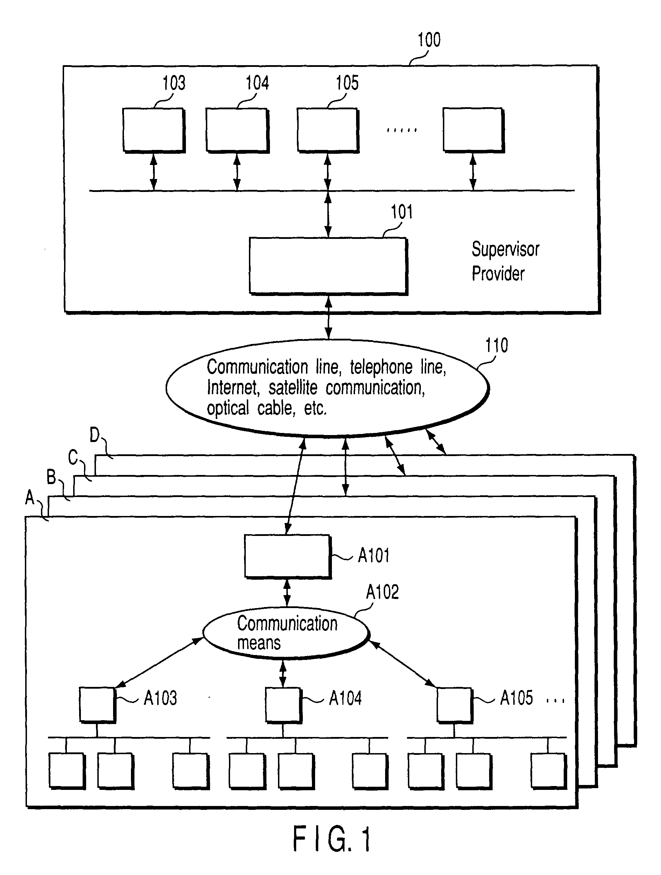

FIG. 1 shows the overall management network to which the present invention is applied as an example, and manages a license associated with software or a computer that installs the software.

Referring to FIG. 1, reference numeral 100 denotes a license provider which rents out software, a computer installed with the software, or a computer alone. In the provider 100, a computer 101 (representative computer) having a license management function can establish connections to computers of external companies A, B, C, D, via a communication means 110. Also, the computer 101 can receive information sent from the computers of external companies A, B, C, D, ···. Of course, in the provider 100, a plurality of computers 103, 104, 105, are connected to the computer 101 via a LAN.

FIG. 1 representatively illustrates a computer A101 of external company A. This computer A101 is a representative computer that manages licenses in company A. Similar representative computers are set in other companies but are not shown in FIG. 1.

The representative computer A101 is connected to intra-office computers or computers A103, A104, A105 in branch and main offices via a communication means (intranet, intra-office LAN) A102. External companies A, B, C, and D are not limited to domestic ones but may be foreign ones.

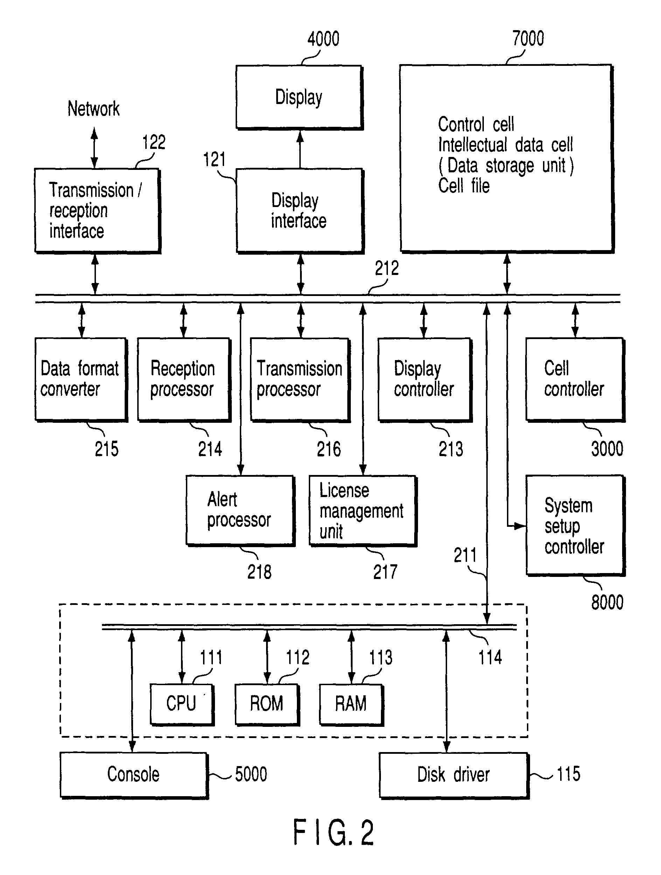

FIG. 2 shows an example of the internal arrangement of the aforementioned computers 101, 103, 104, 105, ···, A101, A103, A104, A105, ···.

Reference numeral 103 denotes a system controller implemented by hardware, in which a CPU 111, ROM 112, and RAM 113 are connected via a bus 114. A console 5000 is also connected to the bus 114. Furthermore, a disk driver 115 is connected to the bus 114.

The ROM 112 describes a program as a so-called operation system (OS) that controls the basic operation of the system controller 113. The CPU 111 exchanges commands with the ROM 112 to execute arithmetic processes based on the OS. The RAM 113 is used as a work memory for temporarily storing data and a program.

The bus 114 is connected to a bus 212 via a bus 211. To the bus 212, functional blocks as characteristic features of the present invention are connected. A display 4000 is connected to the bus 212 via a display interface 121.

The bus 212 is connected to a network via a transmission/reception interface 122. As a network line, various networks such as a public telephone line, Internet line, intranet line, and the like are used.

Images and data displayed on the display 4000 are managed by a display controller 213. Data fetched via the transmission/reception interface 122 is temporarily fetched and held by a reception processor 214. The data held in the reception processor 214 undergoes data format conversion by a data format converter 215 as needed, and the converted data is held in the reception processor 214 again.

Data stored in a transmission processor 216 is sent onto the network via the transmission/reception interface 122. In this case, transmission data contains a telephone number that designates a communication partner, user identification number (ID), computer ID, and the like. Furthermore, the data is sent after it is scrambled. The data format of the transmission data is often converted by the data format converter 215 depending on a communication partner before the data is sent. This is because the data format of a computer of the communication partner may be different from that of this apparatus. For example, various formats such as HTML, text data, and the like are present.

The data format converter 215 also has a function of converting and fetching an item name of some reception data. For example, when a payment slip is sent from a transaction partner, it becomes a redemption slip on the receiving side. On the other hand, when a sales slip is sent from a transaction partner, it corresponds to a purchase slip on the receiving side. Furthermore, when an order placement slip is sent from a transaction partner, it corresponds to an order reception slip on the receiving side. Such conversion function is called a slip item name conversion function.

Furthermore, the data format converter 215 also includes a language conversion dictionary that can translate business terminologies into languages of respective countries, and a currency conversion function for converting the monetary unit. Such a function can be implemented by settling business terminologies together, translating them into languages of respective countries, and storing corresponding terminologies in the conversion dictionary.

Therefore, item names of slips displayed on the screen are prepared in languages of respective countries. When a cell is transferred, the item name of a corresponding slip can be converted into a language of the user's choice by the language conversion dictionary.

A cell controller 3000 and a cell file 7000 that stores cell groups are connected to the bus 212.

In the system of the present invention, all computers possess the same data structure in principle.

Therefore, the computers can easily exchange data with each other, and each computer can easily process data.

A system setup controller 8000 used to initially set up the entire apparatus and to modify functions is connected to the bus 212. The system setup controller 8000 sets the operation timings of the respective blocks in FIG. 2. The system setup controller 8000 monitors the progress of data processes in respective blocks, and determines the next block to operate. For example, when an information input (access) from the console 5000 is detected, the contents of the input are checked to launch the cell controller 3000 or the transmission processor 216. Furthermore, the system setup controller 8000 determines its own operation upon receiving a command from the system controller 103 that operates on the basis of the input information from the console 5000. For example, basic information (initial data, command, or the like) from the disk driver 115 can be transferred to respective blocks.

Furthermore, this system comprises a license management unit 217.

The license management unit 217 has a function of sending report information that pertains to a license agreement to a destination specified in advance via the transmission processor 216 and transmission/ reception interface 122 periodically (every one or two months) or when the power switch of this computer is turned on.

Moreover, this system comprises an alert processor 218 (to be described later). The alert processor 218 operates when any trouble occurs with a license provider or license supervisor in terms of a license agreement.

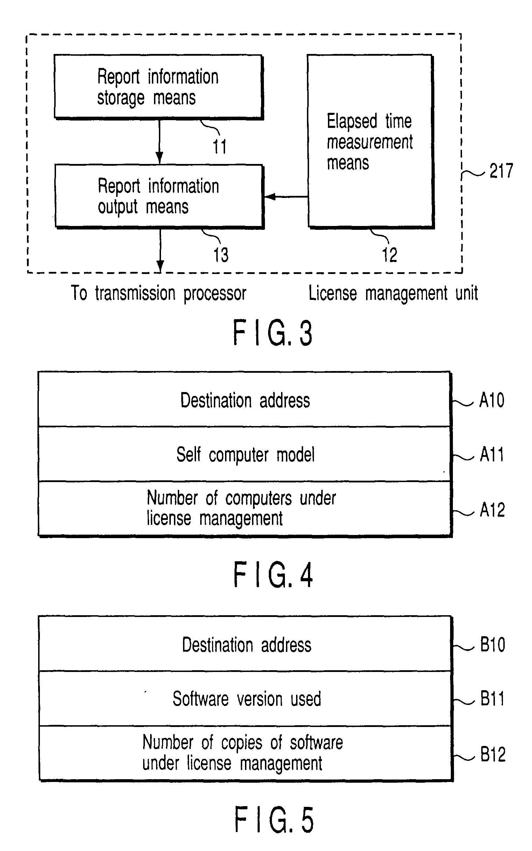

FIG. 3 shows an example of functional blocks of the license management unit 217. The license management unit 217 informs a vendor of the use state of this computer or software installed in this computer, or informs a party who rents out this computer or installed software of its use state. Therefore, the license management unit 217 comprises a report information storage means 11.

The report information storage means 11 transfers report information indicating the use state to the transmission processor 216 in response to a timing signal (command) from an elapsed time measurement means 12 periodically or prior to a use contract term. Preset information in the elapsed time measurement means 12 is set in accordance with the contract contents (e.g., one month, half a year, one year, or two years), and is managed by the system setup controller 8000. As will be described later, the preset information is preset by the system setup controller 8000 under a predetermined condition. The timing signal output from the elapsed time measurement means 12 is also input to the system setup controller 8000, which permits a report information output means 13 to output report information in response to this signal.

The report information stored in the report information storage means 11 has a data format shown in, e.g., FIG. 4 or 5. In the example shown in FIG. 4, a field A11 stores the model of the main computer, and a field A12 stores information indicating the number of computers under the license management. This storage means also stores a destination address in a field A10. In the example shown in FIG. 5, a field B11 stores version information of software that the main computer uses, and a field B12 stores information indicating the number of copies of software under the license management. Of course, a field B10 stores a destination address. The information indicating the number of computers or the number of copies of software under the license management is "1" if only this main computer is used.

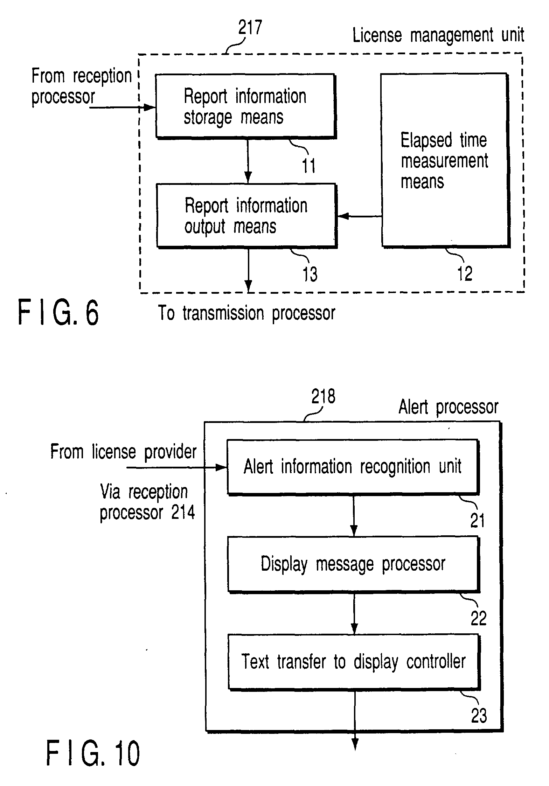

FIG. 6 shows another example of functional blocks of the license management unit 217. In this example, the apparatus has license management information of the main computer, and can include the license states of computers under the management in management information. For this purpose, the report information storage means 11 receives report information from computers under the management via the reception processor 214.

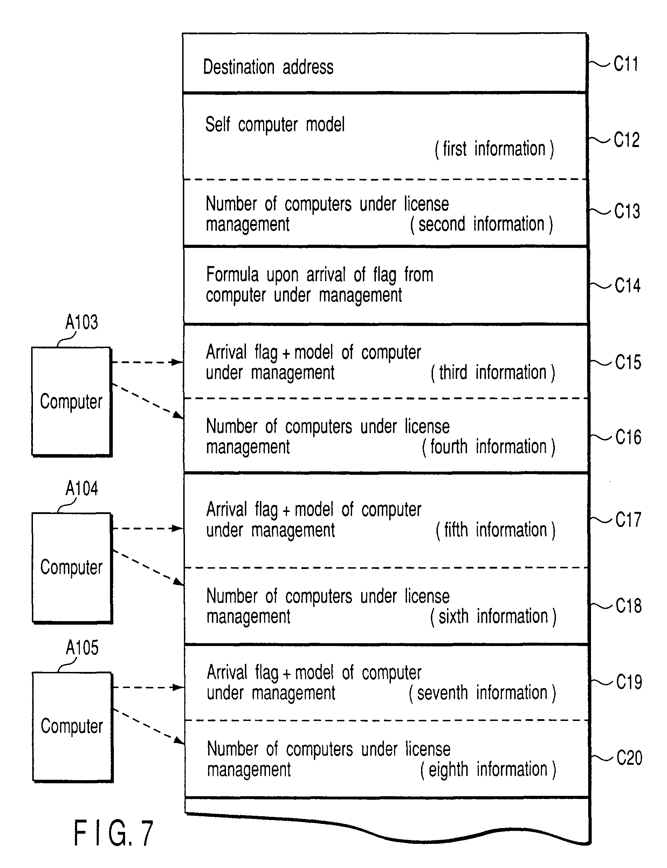

FIG. 7 shows an example of the data format in the report information storage means 11 in the license management unit 217. A field C11 stores a destination address, and a field C12 stores first information indicating the model of the main computer. A field C13 stores second information indicating the number of computers (including the main computer) under the license management.

A field C14 stores information that designates a formula upon arrival of report information from a computer under being managed.

Also, a field C15 stores third information indicating the model of a computer (computer A103) under the license management. When this information is fetched via the reception processor 214, an arrival flag is "1". Together with this third information, fourth information is also sent from the identical computer A103. The fourth information is stored in a field C16, and indicates the number of computers managed by the computer A103.

Furthermore, a field C17 stores fifth information indicating the model of a computer (computer A104) under the license management. When this information is fetched via the reception processor 214, an arrival flag is "1". Together with this fifth information, sixth information is also sent from the identical computer A104. The sixth information is stored in a field C18, and indicates the number of computers managed by the computer A104.

Moreover, a field C19 stores seventh information indicating the model of a computer (computer A105) under the license management. When this information is fetched via the reception processor 214, an arrival flag is "1". Together with this seventh information, eighth information is also sent from the identical computer A105. The eighth information is stored in a field C20, and indicates the number of computers managed by the computer A105.

For example, when the arrival flag in the field C15 is "1", the license management unit 217 updates the second information (the number of computers under the license management) using the formula stored in the field C14. That is, the license management unit 217 computes N ← N + P. After the second information is updated, the arrival flag is reset to "0". Likewise, when the arrival flag in the field C18 is "1", the license management unit 217 updates the second information (the number of computers under the license management) using the formula stored in the field C14. That is, the license management unit 217 computes N ← N + Q. After the second information is updated, the arrival flag is reset to "0". Also, when the arrival flag in the field C20 is "1", the license management unit 217 updates the second information (the number of computers under the license management) using the formula stored in the field C14. That is, the license management unit 217 computes N ← N + R. After the second information is updated, the arrival flag is reset to "0".

Therefore, the second information indicates the number of computers under the management of the main computer.

Assume that the second information is that of the computer A101 shown in FIG. 1. The second information is transferred to the computer 101 via the communication means 110. The computer 101 also has a license management unit which is the same as the aforementioned license management unit. Therefore, the computer 101 recognizes the number of computers under the license management used in company A. Likewise, the computer 101 recognizes the numbers of computers under the license management used in companies B, C, and D.

With this license management unit, the license provider 100 need not manage all the computers under the license management.

This embodiment has exemplified the method of recognizing the number of computers when computers installed with software or computers alone are rented out.

However, the present invention is not limited to the above embodiment, but the number of copies of software that have made a license agreement can be recognized.

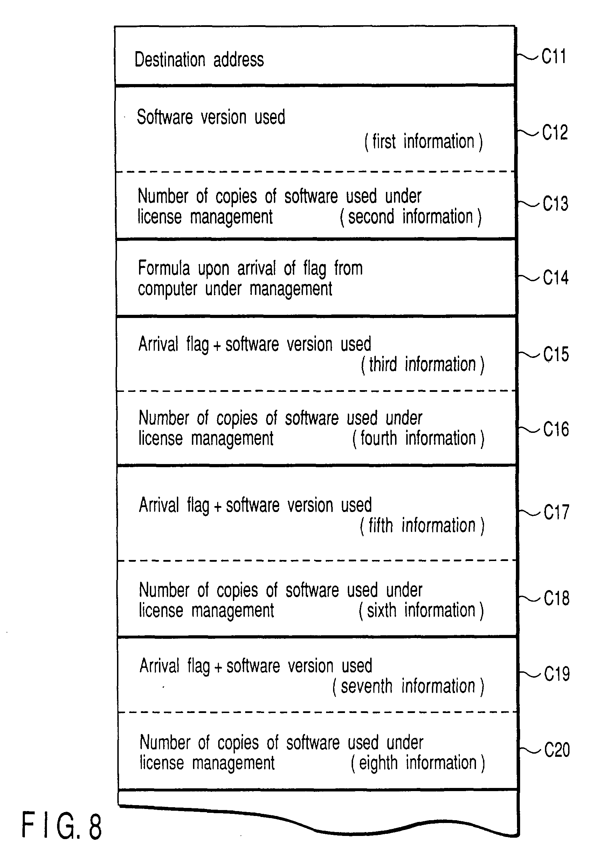

In this case, as shown in FIG. 8, a field C12 stores first information indicating the version of software used, and a field C13 stores information indicating the number of copies of software (including the number of copies of software used in the main computer) used under the license management.

A field C14 stores information of a formula used upon receiving report information from a computer under the management.

Also, a field C15 stores third information indicating the version of software used in a computer (computer A103) under the license management. When this information is fetched via the reception processor 214, the arrival flag is "1". Together with this third information, fourth information is also sent from the identical computer A103. The fourth information is stored in a field C16, and indicates the number of copies of software used, which are managed by the computer A103.

Furthermore, a field C17 stores fifth information indicating the version of software used in a computer (computer A104) under the license management. When this information is fetched via the reception processor 214, an arrival flag is "1". Together with this fifth information, sixth information is also sent from the identical computer A104. The sixth information is stored in a field C18, and indicates the number of copies of software used, which are managed by the computer A104.

Moreover, a field C19 stores seventh information indicating the version of software used in a computer (computer A105) under the license management. When this information is fetched via the reception processor 214, an arrival flag is "1". Together with this seventh information, eighth information is also sent from the identical computer A105. The eighth information is stored in a field C20, and indicates the number of copies of software used, which are managed by the computer A105.

For example, when the arrival flag in the field C15 is "1", the license management unit 217 updates the second information (the number of copies of software used under the license management) using the formula stored in the field C14. That is, the license management unit 217 computes N ← N + P. After the second information is updated, the arrival flag is reset to "0". Likewise, when the arrival flag in the field C18 is "1", the license management unit 217 updates the second information (the number of copies of software used under the license management) using the formula stored in the field C14. That is, the license management unit 217 computes N ← N + Q. After the second information is updated, the arrival flag is reset to "0". Also, when the arrival flag in the field C20 is "1", the license management unit 217 updates the second information (the number of copies of software used under the license management) using the formula stored in the field C14. That is, the license management unit 217 computes N ← N + R. After the second information is updated, the arrival flag is reset to "0".

Therefore, the second information indicates the number of copies of software used under the management of the main computer.

Assume that the second information is that of the computer A101 shown in FIG. 1. The second information is transferred to the computer 101 via the communication means 110. The computer 101 also has a license management unit which is the same as the aforementioned license management unit. Therefore, the computer 101 recognizes the number of copies of software used under the license management used in company A. Likewise, the computer 101 recognizes the numbers of copies of software used under the license management used in companies B, C, and D.

As described above, when a computer being managed sends report information to the managing computer, the report information to be transferred contains the ID of the main computer and customer ID.

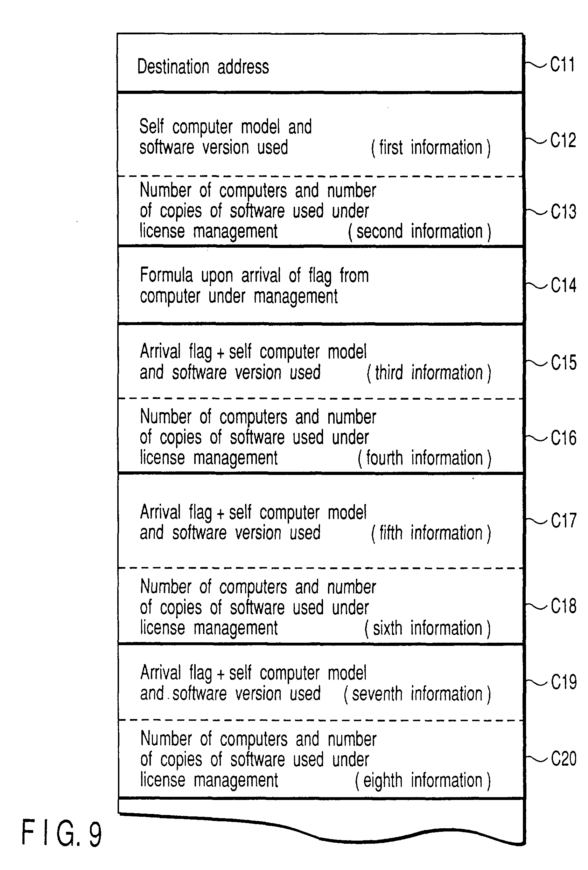

In this example, the license provider 100 recognizes the number of copies of software used. However, the present invention is not limited to such specific embodiment, and both the numbers of copies of software and computers may be recognized. In this case, the embodiments shown in FIGS. 7 and 8 are combined. FIG. 9 shows an example of the data format in the report information storage means 11 in this case.

When the license provider 100 rents out software that requires a license agreement, it can recognize the number of copies of software used on loan. For example, if the report contents from company A indicate that the number of copies of software used exceeds that under the license, the provider 100 can alert company A. Also, the provider 100 can issue a bill for an extra use fee. As will be described later, the provider 100 may have a charge information processing means, and can manage use fees for respective months.

In the above description, for example, when the computer A101 transfers report information to the managing computer 101, that transferred information reports the number of computers or the number of copies of software used, which are managed by the computer A101. However, the contents of the report information are not limited to this. For example, the report information may report all kinds of information such as computer IDs and software versions under the management. In this case, the managing computer 101 communicates with only the computer A101, and the number of computers as communication partners does not increase.

The operation in the alert processor 218 will be explained below.

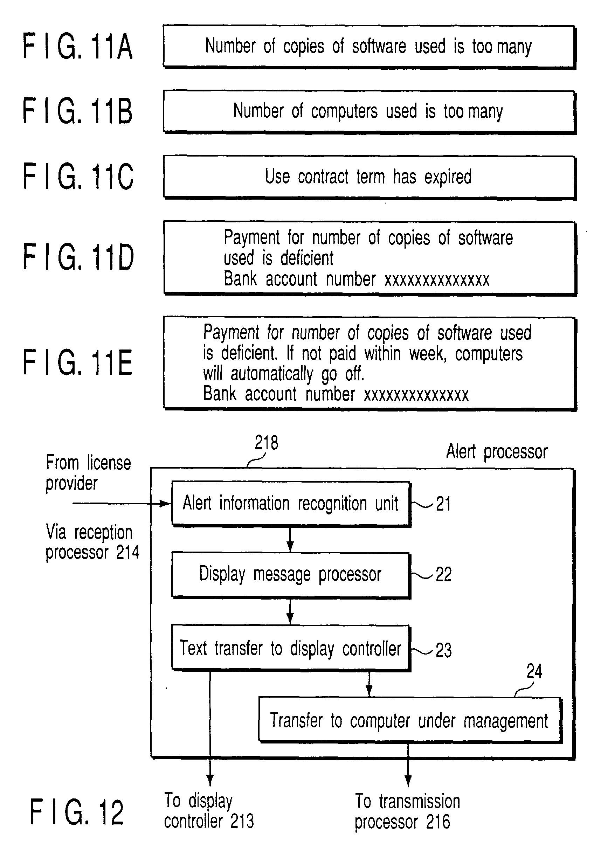

Alert information sent from a computer of the license provider 100 is received by the reception processor 214. The reception processor 214 transfers the alert information to the alert processor 218. The contents of the alert information are interpreted by an alert information recognition unit 21 shown in FIG. 10. A command obtained as a result of interpretation is transferred to a display message processor 22. The display message processor 22 determines the contents of a message to be displayed in accordance with the contents of the command. The message determination result is transferred to a text transfer unit 23. In this manner, message data to be displayed is transferred to the display controller 213. The display controller 213 displays the message on the display 4000 via the display interface 121.

FIGS. 11A to 11E show examples of various messages. As the contents of messages, various contents can be generated: for example, "The number of copies of software used is too many", "The number of computers used is too many", "The use contract term has expired", "The payment for the number of copies of software used is deficient. Bank account number xxxxxxxx", "The payment for the number of copies of software used is deficient. If not paid within a week, computers will automatically go off. Bank account number xxxxxxxx", and so forth.

FIG. 12 shows another embodiment of the alert processor 218. This alert processor 218 is effectively arranged in, e.g., the computer A101 in FIG. 1.

This alert processor 218 has a function of not only displaying a message on the display of the main computer, but also sending the message to computers under the management upon receiving the aforementioned alert information. That is, the text transfer unit 23 transfers text to the display controller 213 and also to a transfer processor 24 to computers under the management. The transfer processor 24 stores destination information including the addresses of computers to which an alert message is to be transferred, the models of the computers, and the like, and transfers the alert message to the transmission processor 216 together with this destination information.

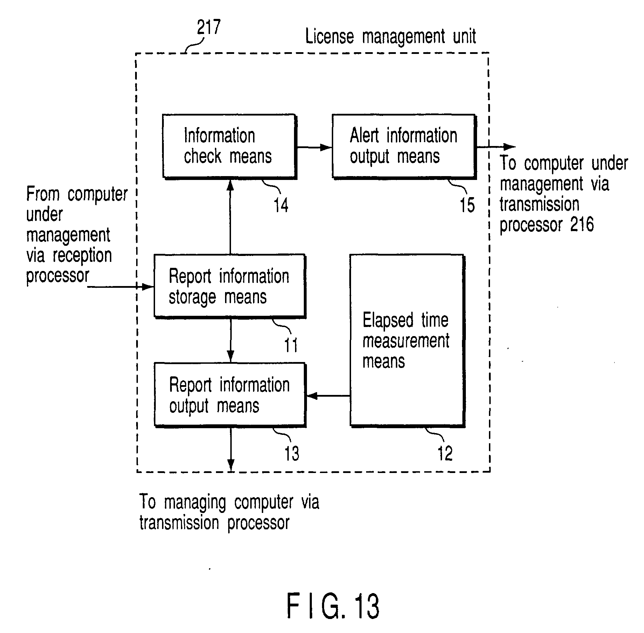

FIG. 13 shows still another embodiment of the license management unit 217.

This license management unit 217 has a function of checking if a contractor uses computers, software, or the like as the contract contents, after the report information indicating the use state is stored in the report information storage means 11. Hence, information of the report information storage means 11 is input to an information check means 14. The checking result (checking contents will be described later) of this means 14 is transferred to the alert information output means 15.

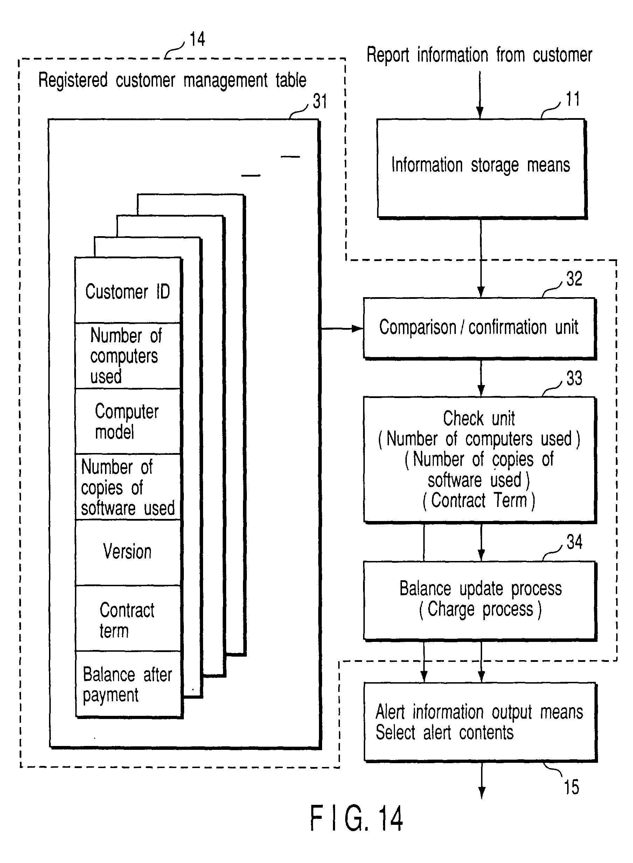

FIG. 14 shows in detail the internal arrangement of the information check means 14. In the information check means 14, customer management tables 31 for many customers are formed. Each customer management table 31 stores, e.g., a customer ID (to be referred to as a registered customer ID hereinafter), the number of apparatuses (e.g., computers) used by the customer (to be referred to as the registered number of computers hereinafter), the model of the computer (to be referred to as a registered computer model hereinafter), the number of copies of software used (to be referred to as the registered number of copies of software hereinafter), a use contract term, and the balance after payment for a rental fee. As the use contract term, the last month or day the contract expires is registered (e.g., the last day of X-th year, Y-th month).

The report information storage means 11 receives report information containing the customer ID (to be referred to as a reported customer ID hereinafter), the ID of the computer used (to be referred to as a reported computer ID hereinafter), and the number of computers used (to be referred to as the reported number of computers used hereinafter), as described above.

A comparison/confirmation unit 32 compares the registered customer ID and reported customer ID, and searches for a customer management table that matches this ID. Furthermore, the comparison/confirmation unit 32 compares the reported computer ID and registered computer ID, and if these IDs match, a contract check unit 33 checks the following items.

Note that the check mode of the contract check unit 33 includes a mode of managing only the number of computers used, a mode of managing only the number of copies of software used, and a mode of managing both the number of computers used and the number of copies of software used.

Also, a mode of managing only the contract term is available. Furthermore, a mode of managing a combination of the contract term and the number of computers used, a mode of managing a combination of the contract term and the number of copies of software used, and a mode of managing a combination of the contract term, the number of computers used, and the number of copies of software used are available. Moreover, a mode of managing the balance after payment in combination with the above modes is available.

If only the number of computers used is managed, the following processing is done. If the checking result indicates that the reported number of computers used has exceeded the registered number of computers used, the contract check unit 33 sends to the alert information output means 15 a command for selecting the alert contents indicating that the number of computers used is too many. If the number of computers used is equal to or smaller than the registered number of computers, a balance processor 34 executes a balance process. In this balance process, (contract fee/month) is subtracted from the current balance.

If only the number of copies of software used is managed, the following processing is done. If the checking result indicates that the reported number of copies of software used has exceeded the registered number of copies of software, the contract check unit 33 sends to the alert information output means 15 a command for selecting the alert contents indicating that the number of copies of software used is too many. If the number of copies of software used is equal to or smaller than the registered number of copies of software, the balance processor 34 executes a balance process (charge process). In this balance process, (contract fee/month) is subtracted from the current balance.

If only the contract term is managed, the following processing is done.

The contract check unit 33 compares the contract term described in the customer management table with the current date. If this checking result indicates that the contract term has expired, the contract check unit 33 sends to the alert information output means 15 a command for warning that the contract term has expired. If the contract term has not expired yet, the balance process is done as in the above examples.

Even when the number of computers used or the number of copies of software used has exceeded the registered number of computers or copies of software, the balance may cover the extra number of computers or copies of software after the next balance process (charge process). In such case, a message "since the number of computers or copies of software used is too many, a use fee for extra computers or copies is added" may be sent as alert information.

Note that the method of confirming using the report information if the contract is fulfilled is not limited to the above example, and various other methods may be used.

In the above description, when, for example, the computer A101 sends report information, the total number of computers or copies of software used is sent to the computer 101. However, the present invention is not limited to this, and a list of all computer models or software versions used under the management may be transferred as the contents of the report information.

In the above description, the computer A101 is a representative computer of company A. However, the present invention is not limited to this. Since computers of the present invention have the same data structure, any of the computers of company A may become a representative one by canceling and re-setting communication rules. For example, the computer A103 or A104 may serve as a representative computer in company A.

To accomplish this, the computer A104 can set a destination in the transmission processor 216 shown in FIG. 2, and can designate a report information receiving computer in the reception processor 214.

One data cell structure in the cell storage unit 7000 shown in FIG. 2 will be explained below.

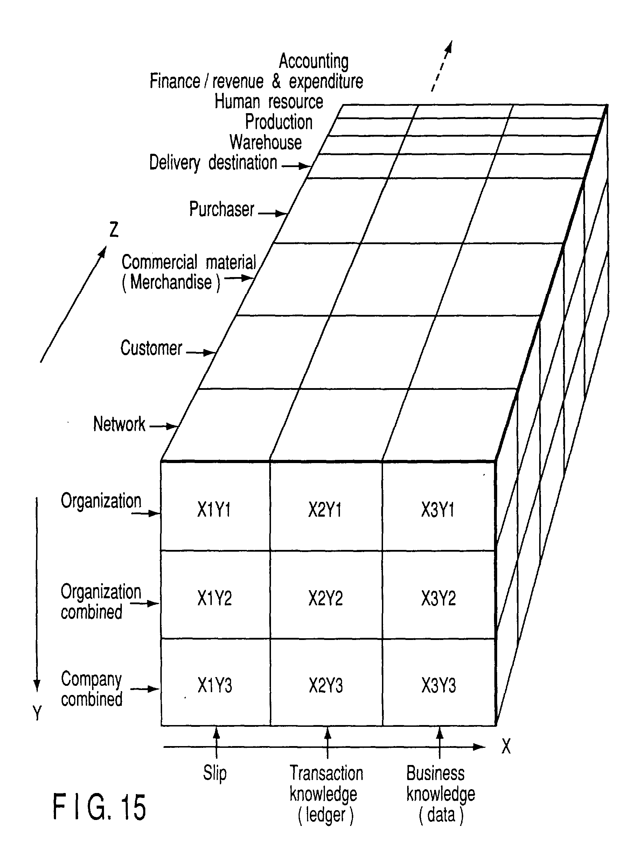

FIG. 15 shows one cell unit as a representative. The cell unit is categorized into columns of an organization Y1, organization combined Y2, and company combined Y3 in the vertical direction, and into columns of a slip X1, transaction knowledge (ledger) X2, and business knowledge X3.

A data group X1Y1 in the column of slip/ organization includes that of various slips used in respective organizations. The organizations include a business department, sales department, production department, and the like in a company. If this cell is used in a computer of the sales department, data groups corresponding to slips used in the sales department are activated.

A data group X1Y2 in the column slip/organization combined, and a data group X1Y3 in the column of slip/company combined store various slips with identification codes, the number and forms of which are the same as those of the data group X1Y1 in the column of slip/organization.

There are many kinds of slips, such as those (worksheets) used in a network system, those exchanged with customers, those associated with commercial materials (merchandises, products, parts) to be dealt in, those associated with purchasers and delivery destinations, those used in a warehouse, those used in the production department, those associated with human resources, those associated with finance/revenue & expenditure, those in accounting, those associated with banks, and the like. Slips include demand slips, offset slips, finance slips, and factoring slips. The finance slips and factoring slips include application slips, permission slips, and NG slips.

These slips are set in the same format in the column X1Y1 of slip/organization, the column X1Y2 of slip/organization combined, and the column X1Y3 of slip/company combined. However, these slips have different meanings in columns they belong to. That is, slips stored in the column X1Y1 of slip/ organization are those used in the department, main office, or branch office where this system is actually equipped.

By contrast, slips stored in the column X1Y3 of slip/company combined are all slips used in all of the main office, branch office, customer companies, and the like, i.e., used in the self system and others. Therefore, even when slips are present in the column X1Y2 of slip/company combined, identical slips present in the column X1Y1 of slip/organization may not be used.

On the other hand, slips stored in the column X1Y2 of slip/organization combined are mainly those for commands, inquiries, contacts, and the like, and combine change, correction, adjustment, and deletion of prices, those of terms, and the like.

For example, assume that a given slip which is stored in the column X1Y2 of slip/organization combined and has an entry of the manufacturers of merchandises is active, and the manufacturer of merchandise is rewritten. This means that the manufacturer of merchandise has changed. Then, the manufacturer of merchandise written on the corresponding slip which is present in the column X1Y1 of slip/organization and indicates the manufacturer of merchandise is changed. In this way, slips stored in the column X1Y2 of slip/organization combined are those mainly used for commands, inquiries, contacts, and the like.

A vertical system of the columns X2Y1, X2Y2, and X2Y3 of transaction knowledge/organization, transaction knowledge/organization combined, and transaction knowledge/company combined stores the same numbers and same forms of various ledgers and strips as data. Ledgers include many ledgers such as those (worksheets), those associated with customers, those associated with commercial materials (merchandise, products, parts) to be dealt in, those associated with purchasers and delivery destinations, those used in a warehouse, those used in the production department, those associated with human resources, those associated with finance/revenue & expenditure, those in accounting, those associated with banks, and the like.

These ledgers are set in the same format in the columns X2Y1, X2Y2, and X2Y3 of transaction knowledge/ organization, transaction knowledge/organization combined, and transaction knowledge/company combined. However, the ledgers have different meanings in respective columns. That is, ledgers stored in the column X2Y1 of transaction knowledge/organization are those used in the department, main office, or branch office where this system is actually equipped. Ledgers stored in the column X2Y2 of transaction knowledge/company combined are those used in all of the main office, branch office, customer companies, and the like.

Also, ledgers stored in the column X2Y3 of transaction knowledge/organization combined mainly indicate commands, inquiries, contacts, and the like, and combine change, correction, adjustment, and deletion of data in the ledgers, those of terms, and the like.

For example, assume that a given ledger stored in the column X2Y2 of transaction knowledge/organization combined is active, and the customer address is rewritten. This means that the customer address has changed. Then, the customer address of the corresponding ledger present in the column X2Y1 of transaction knowledge/organization is changed. In this way, ledgers stored in the column X2Y2 of transaction knowledge/organization combined are mainly those for commands, inquiries, contacts, and the like.

The column X3Y1 of business knowledge/ organization stores actual data corresponding to the slips in the column X1Y1 of slip/organization and the ledgers in the column X2Y1 of transaction knowledge/ organization. This is because, the slips and ledgers often share identical actual data. Also, the column X3Y2 of business knowledge/organization combined stores actual data corresponding to the slips in the column X1Y2 of slip/organization combined and the ledgers in the column X2Y2 of transaction knowledge/ organization combined. Furthermore, the column X3Y3 of business knowledge/company combined stores actual data corresponding to the slips in the column X1Y3 of slip/company combined and the ledgers in the column X2Y3 of transaction knowledge/company combined.

Therefore, a system of the columns X3Y1, X3Y2, and X3Y3 of business knowledge/organization, business knowledge/organization combined, and business knowledge/company combined store the same numbers and same forms of actual data corresponding to ledgers.

The columns of business knowledge store actual data of item names entered in slips, e.g., company names, numerical values, and the like, and also actual data of item names entered in ledgers, e.g., company names, numerical values, and the like. Therefore, these columns data of actual transaction destinations, prices of merchandise and products, sales terms, names and salaries of persons who belong to organizations, and the like. The horizontal systems of slips, ledgers, and knowledge are linked using identification codes of items.

These actual data are set in the columns of business knowledge/organization, business knowledge/ organization combined, and business knowledge/company combined as a vertical system, but have different meanings for respective columns. That is, data stored in the column X3Y1 of business knowledge/organization are those used in the department, main office, or branch office where this system is actually equipped. On the other hand, data stored in the column X3Y3 of business knowledge/company combined are those used in all of the main office, branch office, customer companies, and the like.

Data stored in the column X3Y2 of business knowledge/organization combined mainly indicate commands, inquiries, contacts, and the like, and are those which combine change, correction, adjustment, and deletion of actual data, those of terms, and the like.

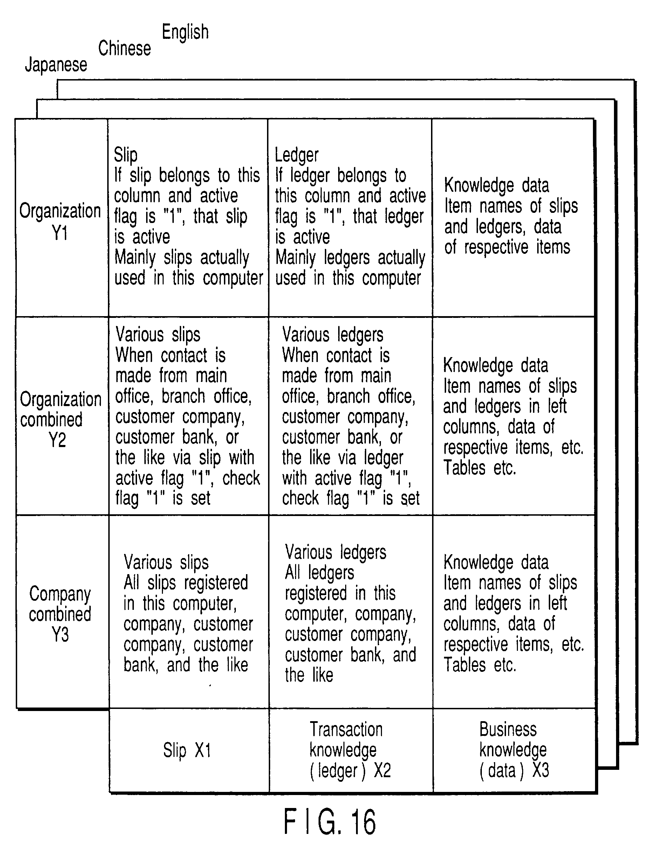

FIG. 16 shows the slip data structure, ledger data structure, and knowledge data structure. The data structure of each slip in the column of slip includes an identification code indicating if this slip belongs to the column of organization, organization combined, or company combined, a slip identification code identifying the slip itself, the number of items (fields for entering the slip name, company name, merchandise name, and the like) of this slip, identification codes of respective items, and an identification code of a layout window used upon displaying this slip. A check flag field is assured, and stores a flag temporarily used when some operation is made immediately after reception or in a transmission ready state. Also, an active flag is stored, and is used to indicate if that slip is currently active. This flag is used to identify a slip which is used in a main office but is not used in a branch office. As another identification code, a code indicating if data of interest belongs to a self data group or a self record data group.

Therefore, identification codes of a company reception data group, other company reception data group, company transmission data group, and other company transmission data group are also stored. Furthermore, other required identification codes are stored.

The data structure of the column of ledger is as follows.

That is, the data structure includes an identification code indicating if this ledger belongs to organization, organization combined, or company combined, a ledger identification code identifying the ledger itself, the number of items that belong to this ledger, identification codes of respective items, an identification code of a layout window used to display this ledger on the window, a check flag, an active flag, and the like. The check flag, active flag, and the like are used in the same manner as in the above slip.

The data structure of the column of knowledge is as follows.

The knowledge data structure is roughly formed by a knowledge table group and all item data groups. Each knowledge table includes an identification code indicating if this table belongs to organization, organization combined, or company combined, an identification code identifying the table itself, identification codes of items collected in this knowledge table, a layout window identification code used to display this knowledge table on a window, a check flag, an active flag, and the like. The check flag, active flag, and the like are used in the same manner as in the above slip. Also, actual data fields and memo information corresponding to all items are stored. Items and data in the column of knowledge correspond to items of the slips and ledgers. The memo information is appended as information indicating the way these data are to be processed, and inquiries, contacts, and the like.

In the above data structures, item names and terminologies are prepared in various languages. That is, data structures corresponding to various languages are prepared. Hence, the language of the item names, slip names, ledger names, and the like can be switched upon displaying slips and ledgers.

In the above cell, in practice, detailed data contents are described in the column of business knowledge, and data (corresponding to addresses) for designating data in the column of business knowledge are described in the columns of transaction knowledge (ledger) and slip, so as to commonly use data. This is because slips and legers commonly use identical customer names, merchandise names, numerical value data, and the like.

A method of using the cell with the above structure will be described below.

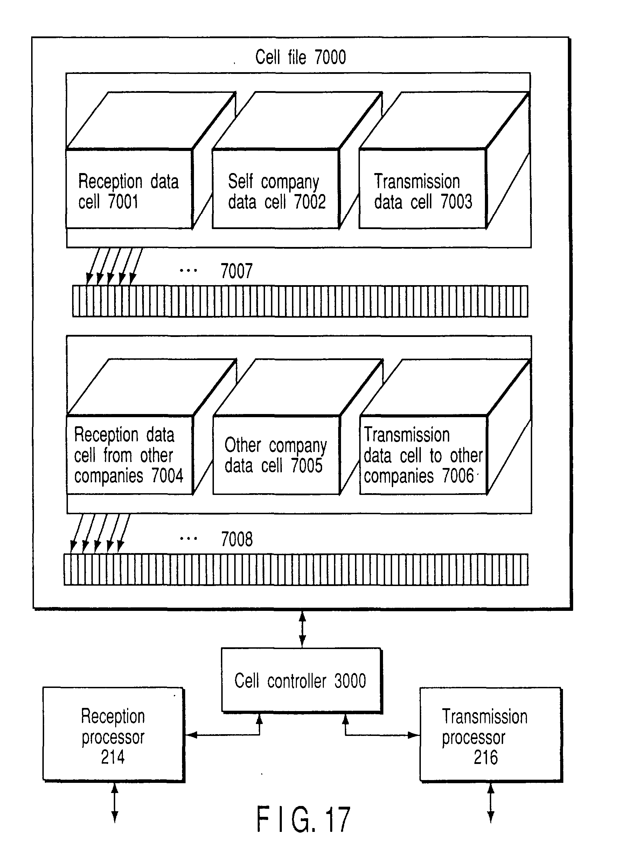

FIG. 17 shows the internal structure of the cell file 7000 shown in FIG. 2 in detail. The cell file 7000 includes a reception data cell 7001 from the company. The data structure of this cell 7001 is the same as that explained with reference to FIG. 16. Furthermore, a company data cell 7002, transmission data cell 7003 to the company, reception data cell 7004 from other companies, other company data cell 7005, and transmission data cell 7006 to other companies having the same structure are assured.

Furthermore, a daily (everyday) storage unit 7007 of company data, and a daily (everyday) storage unit 7008 of other company data are assured. The daily storage unit 7007 stores company data and the cells 7001, 7002, and 7003, in which update records remain, together, or directly stores actual data in the columns of company knowledge of respective cells together.

Likewise, the daily storage unit 7008 stores other company data and the cells 7004, 7005, and 7006, in which update records remain, together, or directly stores actual data in the columns of company knowledge of respective cells together.

The daily storage units 7007 and 7008 can record calls for, e.g., one to three years. Two systems of each of the daily storage units 7007 and 7008 may be prepared to be able to store not only past data but also future data. One system stores daily processing results, and the other system stores data which will be realized in future. For example, when a sales or purchase contract is made, a scheduled delivery or purchase day, and scheduled receipt or payment day are determined. If the contract is made on that day, data associated with these days will become actual data. Therefore, receipt information, payment information, delivery quantity information, arrival quantity information, and the like may be written at future day positions of the daily storage unit.

Such process can be implemented since cells having the same data format are used. To reduce the storage sizes of the daily storage units 7007 and 7008, only data in the column of knowledge may be stored. Since information in the columns of slip and ledger is address information for designating actual data in the column of knowledge, it can be accessed using current address information even at a later date.

In FIG. 17, the company data cell 7002 is illustrated. Alternatively, cells for a main office, branch office, all offices, and so forth may be prepared.

The other company data cell 7005 has the same storage format as that of the company data cell 7002, and stores arbitrary data sent from other companies or arbitrary data that the company permitted reception by other companies as actual data contents.

The above data groups are used in a display control process, construction process, setting process, extraction process, knowledge analysis process, and the like by various applications stored in the cell controller 3000. Note that the knowledge analysis process includes history check, settlement process, and the like. Also, transfer for a transmission process is done. The launch timing of the cell controller 3000 and those of other blocks are managed by the system setup controller 8000.

In the above description, the license management unit 217 and alert processor 218 are independently arranged, as shown in FIG. 2. However, the present invention may implement license management exploiting cells shown in FIGS. 15 to 17.

The license management process using the cells will be explained below.

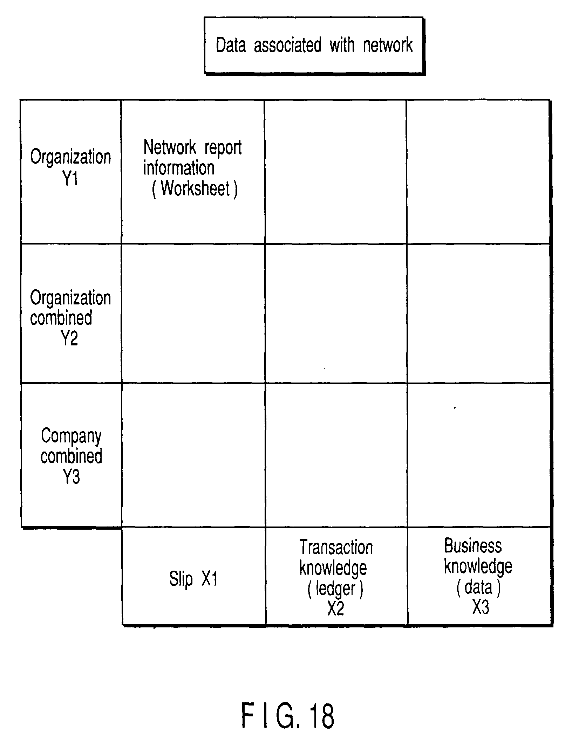

FIG. 18 shows an example of the storage location of report information shown in FIGS. 3 to 9. Therefore, the report information storage means 11 shown in FIG. 3 corresponds to a portion of the cell shown in FIG. 18. A data area of this cell, which pertains to network information in the column X1Y1 of slip/organization stores the report information shown in FIGS. 4 and 5. FIG. 18 illustrates this information as network report information.

The report information output means 13 of the license management unit 217 fetches the above report information (in the column X1Y1 of slip/organization) upon receiving an elapsed time detection signal from the elapsed time measurement means 12, and transfers it to the transmission processor 216.

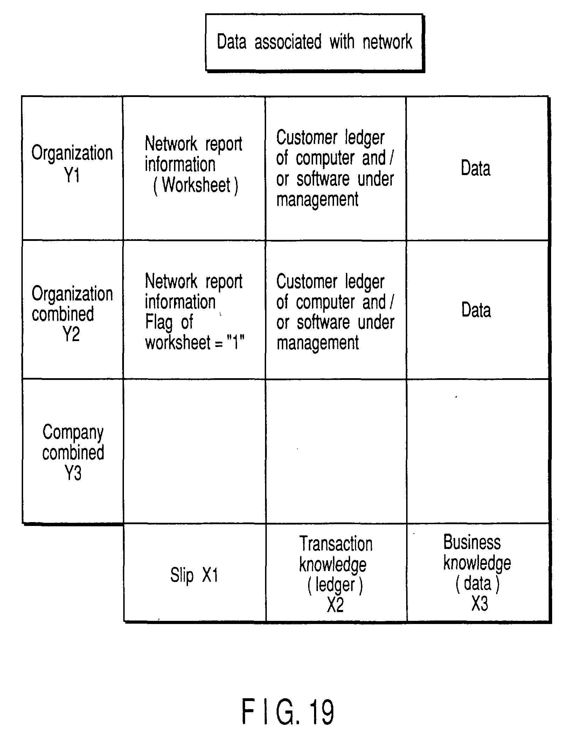

FIG. 19 shows the cell state when report information has arrived from a computer under the management. Upon receiving report information shown in FIGS. 7 to 9 from an apparatus used (computer used) under the management, the reception processor 214 automatically temporarily stores it. The reception processor 214 informs the system setup controller 8000 of received information. In response to this, the system setup controller 8000 informs the cell controller 3000 of received information. The cell controller 3000 stores the received information stored in the reception processor 214 in the column X1Y2 of slip/organization combined of the cell in this case. At this time, a flag indicating that the report information has arrived is appended to the report information, as has been explained using FIGS. 7 to 9. If this report information comes from other companies, it is temporarily written in the reception data cell from other companies shown in FIG. 17; if the information comes from the company, it is temporarily written in the reception data cell of the company shown in FIG. 17. This write process is recognized by the cell controller 3000 via the system setup controller 8000. Then, as described above using FIGS. 7 to 9, a total N of the numbers of computers used or the numbers of copies of software used under the license management is computed. That is, the slip (worksheet) of this area has a format explained above using FIGS. 7 to 9.

This result is then written in the column X1Y1 of slip/organization. Upon completion of this process, this data is written in the company data cell 7002 or other company data cell 7005. After that, the contents of the reception data cell are deleted. If this information must be further reported, the destination address is referred to, and the information is sent to the next transfer destination when the set time is reached, as described above using FIG. 18.

Assume that the cell shown in FIG. 19 is stored in the computer 101 shown in FIG. 1. This computer 101 must check if the number of computers rented out to a customer is appropriate or the number of copies of software provided to a customer is appropriate, as has been explained above using FIG. 14. The check process explained using FIG. 14 is done every week or month. In this case, the customer management table is required. This customer information is stored in the customer ledger in the column X2Y1 of transaction knowledge/organization in the company data cell, as has been explained above using FIGS. 15 and 17. Also, the balance information is also stored in this ledger. The number of computers used or the number of copies of software used is contained in the report information updated and stored in the column X1Y1 of slip/organization. Therefore, the number of computers used or the number of copies of software used is checked using such information. This check process is implemented by software stored in, e.g., the cell controller 3000.

The present invention is not limited to the above embodiment.

In the above embodiment, the report information includes the number of computers used or the number of copies of software used, and the method of managing it has been explained. However, the version information of software may be contained in the report information. When software has been updated to a new version, the license provider may transfer new software according to an order from a customer.

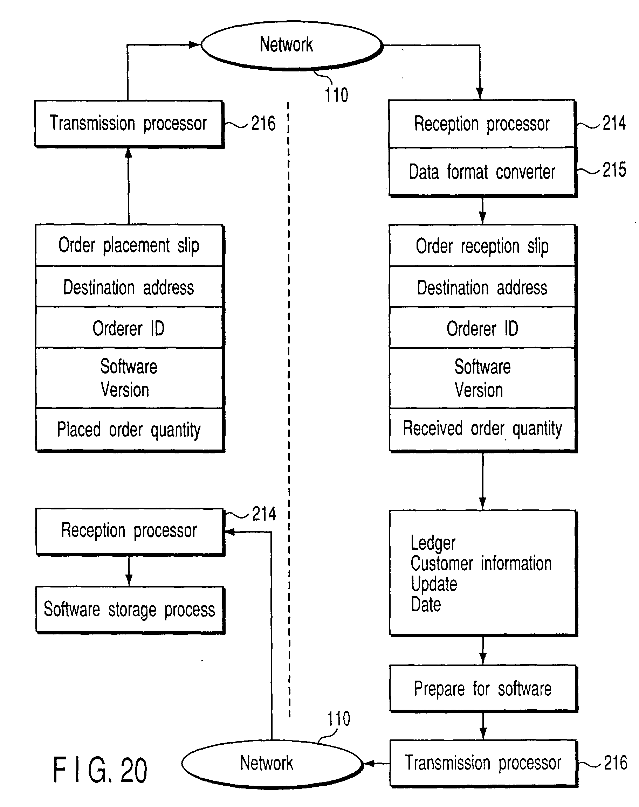

FIG. 20 shows the operation of the system of the present invention upon receiving an order slip from the customer.

In this case, the aforementioned cell is used. As shown in FIG. 20, information of an order placement slip is generated on the customer side. This order placement slip has entries of a destination address, an orderer ID (customer ID), required software version, and a placed order quantity. The information of the order placement slip is sent to the license provider via the transmission processor 216 and network 110. In the license provider, the order placement slip received by the reception processor 214 is recognized, and its name is converted by the data format converter 215. That is, the order placement slip is converted into a order reception slip. To the order reception slip, the orderer ID, required software version, and a received order quantity (fetched from the placed order quantity) are posted.

The cell controller 3000 in the license provider updates the customer information in the cell. That is, the cell controller 3000 updates the version information of software used, and the number of copies of software used. Then, software of the order-received version is stored and prepared in a temporary storage, and is transferred to the transmission processor 216. In this case, the software is sent as information of a delivery slip. The delivery slip to be sent is appended with the destination address and software contents.

As described above, in this system, transmission and reception rules for designating sources and destinations can be set. By setting a plurality of sources and destinations, the information transmission path described in FIG. 1 can be formed.

In the above embodiment, management of computers and copies of software used therein has been explained. However, the present invention can perform rental management of every other apparatuses and devices using the aforementioned method as long as they have a computer function. For example, when, for example, vehicles (private cars, auto trucks, and the like) and home electric appliances (TV receivers, portable phones, video tape recorders, disk players, and the like) have a computer function, rental management can be easily done by adding the management function of the present invention.

In the above embodiment, when status report information is sent from the user computer under the management to the managing computer, the managing computer checks if the user computer appropriately fulfills the contract contents. If the contract contents are not appropriately fulfilled, an alert is generated.

However, the present invention is not limited to such specific embodiment.

That is, when the user computer appropriately fulfills the contract content, key information used to obtain launch permission of software may be distributed to allow the user computer to operate normally up to the next expiration time of the contract term. However, in this case, if 48 hours or one week has elapsed in the user computer after the contract term has expired, means for automatically destructing or changing the key information used to obtain launch permission of software is required.

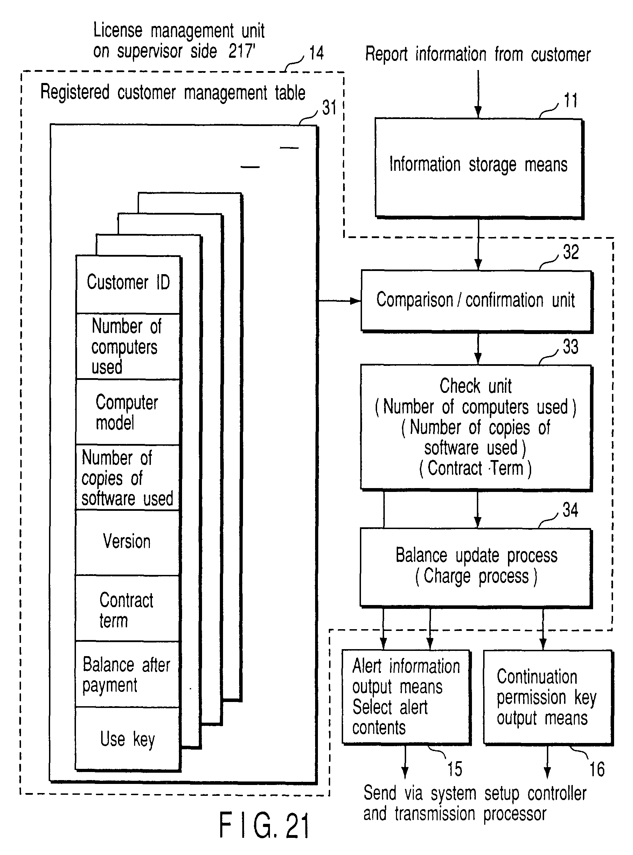

FIG. 21 shows another embodiment of a license management unit 217' in the managing computer. This license management unit 217' sends a continuation permission key to the user computer to allow the user computer to operate normally up to the next use term when the user normally fulfills the contract contents. Therefore, after the balance update process, a continuation permission key output means 16 sends key information to the user. Other blocks are as described above with reference to FIG. 14. Each customer management table 31 of this license management unit 217' stores key information that the customer computer currently uses. This is to send key information having contents different from that the customer currently uses to that customer when the term is updated next time. The reason why the customer must use keys having different contents in different contract terms is that the key contents may be broken if the customer uses a key of given contents for a long term of time.

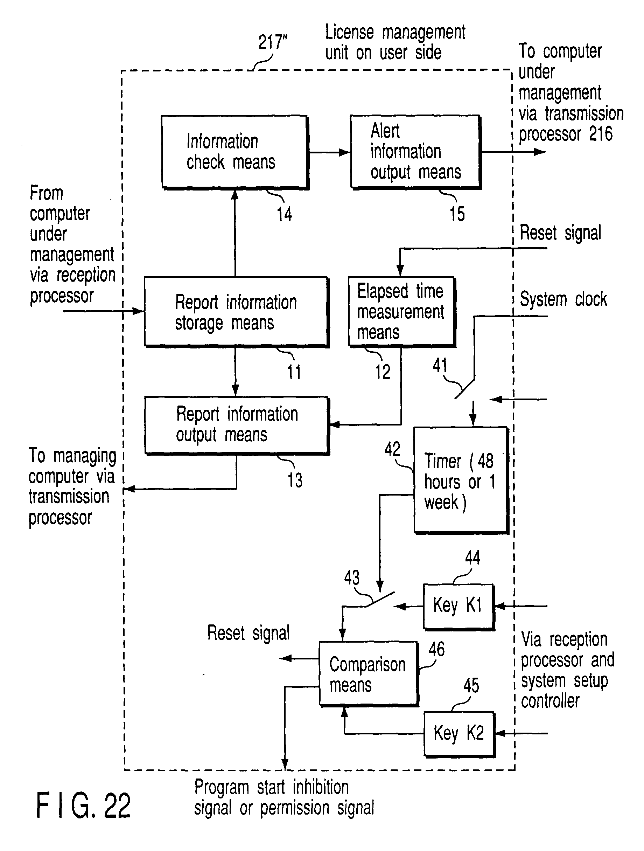

FIG. 22 shows another embodiment of a license management unit 217" on the user (customer) side. This license management unit 217" corresponds to the license management unit 217' shown in FIG. 21.

Upon receiving key information from the management side, it is received by the reception processor 214 sown in FIG. 2, and that event is recognized by the system setup controller 8000. The key information sent from the management side means that this user normally uses the computer. In this case, the system setup controller 8000 supplies first key information K1 and second key information K2 received to key storage units 44 and 45. A comparison means 46 compares the first and second keys K1 and K2 (signals at its two input terminals) to check if they have a predetermined relationship or they match. If the first and second keys K1 and K2 satisfy a pre-set condition (e.g., they match), the comparison means 46 outputs a program start permission signal and reset signal.

The reset signal is supplied to the elapsed time measurement means 12. As a result, the elapsed time measurement means 12 starts time measurement up to the next update timing from an initial value (preset value). Also, the system setup controller 8000 permits to start the program on the basis of the program start permission signal.

When the elapsed time measurement means 12 supplies a timing signal for transferring report information to the report information output means 13, this timing signal is also supplied to the system setup controller 8000 shown in FIG. 2. The system setup controller 8000 turns on a switch 41 to start a timer 42. The timer 42 counts system clocks to measure 48 hours or one week.

On the other hand, when the user does not normally use the computer, e.g., when the user turns off a communication line and uses the computer freely, no key information is sent from the management side. In such state, the comparison means 46 does not operate. If the timer 42 has measured 48 hours or one week, it supplies a control signal to turn off the switch 43 or a clear signal to the key storage unit 44. The control signal or clear signal at that time is also recognized by the system setup controller 8000. Then, the system setup controller 8000 controls the comparison means 46 to compare two inputs. In this case, since the switch 43 is OFF or the contents of the key storage unit 44 have been cleared, the comparison means 46 obtains a signal indicating that the two input do not match or do not satisfy a predetermined condition. This signal is used as a program start inhibition signal.

Hence, when no keys K1 and K2 are sent from the managing computer and the allowable time of the timer 42 has expired, the program is inhibited from starting.

The present invention is not limited to the above embodiment. When a program start permission signal is generated, various methods may be used to improve security of key information.

In the above embodiment, the keys K1 and K2 are stored in the key storage units 44 and 45. Alternatively, the comparison (addition or subtraction) result of the keys K1 and K2 by the comparison means 46 may also be stored in the comparison means 46. That is, the keys K1 and K2 and their processing result are sent, and are stored in the comparison means 46. Only when the processing result of the keys K1 and K2 matches the value stored in the comparison means 46, a program start permission signal may be obtained. When the switch 41 is OFF, a program start inhibition signal is output.

## Claims

1. A license management apparatus on a customer side, which makes a license agreement of software and/or a use apparatus that installs the software, **characterized by** comprising:
report information storage means (11) for storing report information that pertains to the license agreement;
elapsed time measurement means (12) for detecting an elapse of a predetermined term, and outputting detection information; and
report information output means (13) for automatically sending the report information as use information to a predetermined destination in response to the detection information input from the elapsed time measurement means.

2. An apparatus according to claim 1, **characterized in that** the report information that pertains to the license agreement is apparatus use information indicating that the use apparatus is in use.

3. An apparatus according to claim 1, **characterized in that** the report information that pertains to the license agreement is software use information indicating that the use apparatus has installed the software.

4. An apparatus according to claim 3, **characterized in that** the software use information contains version information of the software.

5. An apparatus according to claim 1, **characterized in that** the use apparatus is a personal computer.

6. An apparatus according to claim 1, **characterized in that** the use apparatus is a vehicle such as a passenger vehicle, motorbike, auto truck, and the like, and said report information output means includes a radio device.

7. An apparatus according to claim 1, **characterized in that** the use apparatus is a home electric appliance such as a television receiver, refrigerator, or the like.

8. An apparatus according to claim 1, **characterized in that** said report information output means includes transmission/reception means connected to one of a radio line, telephone line, Internet, and intranet.

9. An apparatus according to claim 8, **characterized by** further comprising a license alert processing device connected to said transmission/reception means.

10. An apparatus according to claim 9, **characterized in that** said license alert processing device generates alert display information upon receiving an alert command via said transmission/reception means.

11. A license management apparatus **characterized by** comprising:
report information storage means (11) for storing report information that pertains to a license agreement from a plurality of use apparatuses under management;
elapsed time measurement means (12) for detecting an elapse of a predetermined term, and outputting detection information; and
report information output means (13) for automatically sending the report information as use information to a predetermined destination in response to the detection information input from the elapsed time measurement means.

12. An apparatus according to claim 11, **characterized in that** said report information storage means is connected to the plurality of use apparatuses under the management via communication means, and stores report information that pertains to the license agreement of each use apparatus.

13. An apparatus according to claim 12, **characterized in that** said report information output means sends the number of the plurality of use apparatuses under the management as the use information when said report information output means outputs the report information as the use information.

14. An apparatus according to claim 12, **characterized in that** said report information output means sends the number of copies of software installed in the plurality of use apparatuses under the management as the use information when said report information output means outputs the report information as the use information.

15. An apparatus according to claim 11, **characterized in that** the use apparatus is a personal computer.

16. An apparatus according to claim 11, **characterized in that** the use apparatus is a vehicle such as a passenger vehicle, motorbike, auto truck, and the like, and said report information output means includes a radio device.

17. An apparatus according to claim 11, **characterized in that** the use apparatus is a home electric appliance such as a television receiver, refrigerator, or the like.

18. An apparatus according to claim 11, **characterized in that** said information storage means, elapsed time measurement means, and report information output means are equipped in a relay server.

19. An apparatus according to claim 11, **characterized in that** said report information output means includes transmission/reception means connected to one of a radio line, telephone line, Internet, and intranet.

20. An apparatus according to claim 19, **characterized by** further comprising a license alert device connected to said transmission/reception means.

21. An apparatus according to claim 19, **characterized in that** said license alert processing device generates alert display information and sends the information to the plurality of use apparatuses under management upon receiving an alert command via said transmission/reception means.

22. A license management apparatus **characterized by** comprising:
report information storage means (11) for receiving report information that pertains to a license from a customer, which is sent via communication means;
check means (33) for comparing the report information from the customer with corresponding registered information, and checking if the comparison result satisfies a predetermined condition; and
transmission means (15, 16) for, when the check result of said check means does not satisfy the predetermined condition, outputting alert information and sending the alert information to a terminal of the customer, and for, when the check result satisfies the predetermined condition, sensing key information that allows the terminal to continue operation.

23. An apparatus according to claim 22, **characterized in that** the key information contains a plurality of pieces of key information.

24. A license management method wherein a user apparatus which is granted use permission, or a user apparatus that uses software which is granted use permission comprises means for storing condition information used to update the use permission, and sends the condition information used to update the use permission to a management apparatus that granted the use permission, and
the management apparatus that granted the use permission checks contents of the condition information used to update the use permission, and sends key information to the use apparatus only when the contents satisfy an update condition.
